# EUROPÄISCHE PATENTSCHRIFT

(11) **EP 3 411 242 B1**
(45) Veröffentlichungstag und Bekanntmachung des Hinweises auf die Patenterteilung: **10.11.2021**
(21) Anmeldenummer: 17703121.8
(22) Anmeldetag: 02.02.2017
(51) Int. Cl.: B41J 11/00, B01D 19/00, C09D 11/101, B41J 2/19, B65B 61/26, B41M 7/00, B05D 3/06, B05D 1/26, B05D 3/04, B65D 5/00, C09D 11/30

(54) **VERFAHREN ZUM AUFTRAGEN VON KUNSTSTOFFBESCHICHTUNGEN, VORRICHTUNG ZUR DURCHFUHRUNG DES VERFAHRENS UND VERFAHRENSGEMASS HERSTELLBARES BESCHICHTETES SUBSTRAT**
DEVICE FOR APPLYING PLASTIC COATINGS, DEVICE FOR IMPLEMENTING THE METHOD, AND COATED SUBSTRATE THAT CAN BE PRODUCED ACCORDING TO THE METHOD
PROCEDED'APPLICATION DE REVETEMENTS DE MATIERE PLASTIQUE, DISPOSITIF POUR METTRE EN OEUVRE LE PROCEDE ET SUBSTRAT REVETU POUVANT ETRE PRODUIT SELON LE PROCEDE

(30) Priorität: 04.02.2016 DE 102016101970
(43) Veröffentlichungstag der Anmeldung: 12.12.2018
(73) Patentinhaber: ACTEGA Schmid Rhyner AG, 8134 Adliswil (CH)
(72) Erfinder: SCHLATTERBECK, Dirk, 9504 Fritschen (CH)
(74) Vertreter: Blumbach · Zinngrebe Patentanwälte PartG mbB
(86) Internationale Anmeldenummer: PCT/EP2017/052254
(87) Internationale Veröffentlichungsnummer: WO 2017/134165

(56) Entgegenhaltungen:
- EP-A1- 1 574 553
- EP-A1- 2 781 359
- EP-A1- 2 848 659
- WO-A1-2014/165323
- WO-A1-2015/071269
- WO-A1-2015/137498
- JP-A- 2003 089 198
- JP-A- 2003 285 425
- JP-A- 2003 285 431
- JP-A- 2014 205 259
- JP-A- 2015 080 921
- US-A1- 2014 132 682
- US-A1- 2015 035 905
- US-A1- 2015 360 462
- US-B1- 6 550 905
- US-B2- 7 559 615

## Beschreibung

Die Erfindung betrifft allgemein das Beschichten von Substraten mit Kunststoffen, insbesondere mit Lacken. Im Speziellen betrifft die Erfindung die Herstellung von Beschichtungen durch Vernetzen und/oder Polymerisierung organischer Moleküle.

Vernetzende Lacksysteme werden in industriellen Fertigungsprozessen, wie etwa bei der Beschichtung von Druckerzeugnissen und Verpackungen in großem Maßstab eingesetzt. Vernetzende Lacksysteme sind hier vorteilhaft, da sie schnell durch eine Initiierung der Vernetzung ausgehärtet werden können und ein Abdampfen von Lösungsmitteln entfallen kann.

Allerdings können auch bei einer solchen Beschichtung aus einem vernetzten Kunststoff aufgrund einer unvollständigen Vernetzung noch nicht vernetzte Bestandteile enthalten sein. Neben nicht vollständig vernetzten Monomeren kann es sich hierbei auch um im Kunststoff befindliche, ungebundene Verbindungen, beispielsweise Initiatoren oder andere Additive, handeln. Diese Bestandteile können aus der Beschichtung in die Umgebung migrieren. Dieser Effekt ist besonders bei sensiblen Verpackungen wie beispielsweise beschichteten Lebensmittelverpackungen kritisch.

Eine mögliche Ursache für eine unvollständige Vernetzung ist die Blockierung oder Neutralisierung reaktiver Gruppen der Präpolymere oder Initiatormoleküle. Eine Ursache für eine solche Neutralisierung ist eine Reaktion mit Luftmolekülen, insbesondere mit Luftsauerstoff. Dieser Effekt ist insbesondere bei radikalischen Polymerisationen ausgeprägt, da der Sauerstoff als Radikalinhibitor wirken und so die Polymerisationsreaktion abbrechen kann, d.h. es kann zu einer Sauerstoffinhibierung kommen. Um einer unvollständigen Vernetzung entgegenzuwirken, werden Photoinitiatoren oft im Überschuss verwendet. Damit stehen auch nach einer Neutralisierung eines Teils der Photoinitiatoren noch hinreichend viele Initiatormoleküle zur Verfügung. Nachteilig ist hierbei dann aber, dass die überschüssigen Initiatormoleküle üblicherweise nicht in das Polymer eingebunden werden können und aus der Schicht migrieren können.

Aus der WO 96/34700 A1 ist eine Vorrichtung zum Härten einer UV-härtbaren Beschichtung beschrieben.

Die Vorrichtung umfasst ein Gehäuse, welches im Bereich der ihm zugewandten Oberfläche eines beschichteten Substrats aus Papier, Kunststoff, Glas, Holz oder Metall, welches mit Druckfarben, Lack, Silikon bzw. einem Kleber beschichtet ist, offen ist. Das Gehäuse deckt das Substrat unter Beibehaltung seitlicher Spalte als Substrateinlauf und Substratablauf ab. Innerhalb des Gehäuses ist eine UV-Lampe mit einem Reflektor angeordnet, welcher das UV-Licht auf das durchlaufende Substrat richtet. Eine Spülgasleitung ist mit dem Innenraum des Gehäuses über zumindest eine Düse verbunden. Neben dem Substrateinlaufspalt und dem Substratauslaufspalt sind Spülgasdüsen vorgesehen, deren Strömungsrichtungswinkel in Bezug auf das durchlaufende Substrat einstellbar sind. Es ist jedoch aus dem Stand der Technik bekannt, dass eine Neutralisierung der Photoinitiatoren durch Reaktion mit Sauerstoff, d.h. ein Abfangen von Radikalen, bereits in der Vorrichtung erfolgen kann.

Die DE 27 00 179 A1 beschreibt flexible. gedruckte Schaltungen, bei denen eine isolierende Abdeckschicht aus einem Lack besteht, der unter UV-Licht oder einem Elektronenstrahl gehärtet wird. Zur Herstellung der Schicht können auch ungesättigte Harze verwendet werden, die unter Bestrahlung gehärtet werden. Die Verwendung eines Inertgases wird im Zusammenhang mit der Härtung mittels Elektronenstrahlen beschrieben.

Aus der WO 2012/015407 A1 ist eine Tintenstrahldruckvorrichtung zum Bedrucken mit UVhärtbarer Tinte bekannt. Bei dieser Vorrichtung wird eine zweistufige Härtung der Tinte durchgeführt. Die Tinte wird zunächst mit einem Tintenstrahl-Druckkopf aufgedruckt, dann mit einer ersten UV-Strahlungsquelle angehärtet, so dass die Tinte am Substrat haftet, anschließend mit einer Beschichtungseinheit ein Flüssigfilm auf die angehärtete Beschichtung aufgetragen und schließlich mit einer weiteren UV-Lichtquelle eine vollständige Härtung durchgeführt. Der Flüssigfilm dient dabei für einen Sauerstoffabschluss bei der endgültigen Aushärtung mit der zweiten UV-Quelle.

Allerdings muss der aufgetragene Flüssigkeitsfilm nach dem Aushärten wieder entfernt werden.

Sofern die Tinte nicht vollflächig aufgetragen wird, kann der Flüssigfilm zudem vom Substrat aufgesogen werden. Gerade bei porösen, saugfähigen Substraten wie Papier oder Karton kann das Substrat aufquellen und wellig werden. Auch hier besteht wie auch bei der aus der WO 96/34700 A1 bekannten Vorrichtung zudem die Möglichkeit, dass Sauerstoff bereits beim Auftrag der UV-härtbaren Tinte in die aufgetragene Schicht gelangt. Aus der JP2003285431A ist eine Tintenstrahldruckvorrichtung zum Bedrucken mit UVhärtbarer Tinte bekannt. Der Schritt des Druckens und Aushärtens erfolgt in einem Gehäuse, in dem der Sauerstoffgehalt auf 10 % oder weniger kontrolliert wird. US2014/132682 A1, WO2015/137498 A1, JP2014205259 A, US7559615 B2 und EP1574553 A1 offenbaren Entgasungseinrichtungen.

Der Erfindung liegt die Aufgabe zugrunde, ein hinsichtlich des Druckbilds flexibles Verfahren und eine entsprechende Vorrichtung zum Beschichten mit härtbaren organischen Beschichtungen anzugeben, bei welchem eine Inhibierung reaktiver Gruppen durch Sauerstoff oder andere Stoffe der Umgebung, wie etwa Wasser weitestgehend oder sogar vollständig vermieden wird.

Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben. Die Merkmale der Weiterbildungen können, soweit technisch sinnvoll, miteinander kombiniert werden.

Demgemäß sieht die Erfindung eine Vorrichtung zum Beschichten eines flächigen Substrats mit einer Polymerbeschichtung vor. Die Vorrichtung umfasst folgende Komponenten:
- einen Tintenstrahldruckkopf mit mehreren Düsen und einem mit den Düsen verbundenen Vorratsbehälter zur Aufnahme eines polymerisierbaren oder vernetzbaren Beschichtungsfluids,
- eine Härtungseinrichtung zur Härtung des vom Tintenstrahldruckkopf auf das Substrat aufgetragenen Beschichtungsfluids,
- eine Vorschubeinrichtung zum Transport des Substrats relativ zum Tintenstrahldruckkopf und zur Härtungseinrichtung derart, dass ein Oberflächenabschnitt des Substrats zuerst am Tintenstrahldruckkopf entlang und danach an der Härtungseinrichtung vorbei bewegt wird,
- ein Gehäuse, in welchem die Härtungseinrichtung und der Tintenstrahldruckkopf angeordnet sind, und
- eine Einrichtung zur Zuführung eines Inertgases, welche am Gehäuse angeschlossen ist, um das Gehäuse mit Inertgas zu fluten, so dass sowohl das in das Gehäuse eingeführte Substrat in der Inertgasatmosphäre mit dem Tintenstrahldruckkopf beschichtbar, als auch die aufgedruckte fluide Beschichtung mittels der Härtungseinrichtung zu einer festen Polymerbeschichtung durch Polymerisierung oder Vernetzung in der Inertgasatmosphäre aushärtbar ist.

Ein weiterer Aspekt der Erfindung betrifft ein Verfahren zum Beschichten eines flächigen Substrats mit einer Polymerbeschichtung. Das Verfahren umfasst folgende Schritte:
- mit einem Tintenstrahldruckkopf mit mehreren Düsen und einem mit den Düsen verbundenen Vorratsbehälter mit einem polymerisierbaren oder vernetzbaren Beschichtungsfluid wird eine fluide Beschichtung auf das Substrat aufgedruckt;
- mit einer Härtungseinrichtung wird die vom Tintenstrahldruckkopf auf das Substrat aufgetragene fluide Beschichtung durch Vernetzen oder Polymerisieren ausgehärtet;
- mit einer Vorschubeinrichtung wird das Substrat relativ zum Tintenstrahldruckkopf und zur Härtungseinrichtung derart bewegt, dass ein Oberflächenabschnitt des Substrats während des Auftrags der fluiden Beschichtung zuerst am Tintenstrahldruckkopf entlang und danach an der Härtungseinrichtung vorbeigeführt wird;
- die Härtungseinrichtung und der Tintenstrahldruckkopf sind in einem Gehäuse angeordnet, wobei mittels einer am Gehäuse angeschlossenen Einrichtung zur Zuführung eines Inertgases das Gehäuse mit Inertgas geflutet wird, so dass sowohl das in das Gehäuse eingeführte Substrat in der Inertgasatmosphäre mit dem Tintenstrahldruckkopf beschichtet wird, als auch die aufgedruckte fluide Beschichtung mittels der Härtungseinrichtung zu einer festen Polymerbeschichtung durch Polymerisierung oder Vernetzung in der Inertgasatmosphäre ausgehärtet wird. Zudem ist die Vorrichtung derart ausgebildet, dass durch das Aufbringen der Beschichtung laminare Luftschichten auf dem Substrat entfernt werden können.

Ein weiterer Aspekt der Erfindung betrifft ein mit dem erfindungsgemäßen Verfahren hergestelltes beschichtetes Substrat.

In dem vorliegenden Dokument ist unter Inertgas ein Gas zu verstehen, das im wesentlichen frei von molekularem Sauerstoff und sehr reaktionsträge (inert) ist. Das ist also ein Gas, das sich an nur wenigen chemischen Reaktionen beteiligt. Das Inertgas kann beispielsweise Stickstoff, Kohlenstoffdioxid oder ein Edelgas sein. Unter dem Begriff "im wesentlichen frei von molekularem Sauerstoff" wird verstanden, dass das Gas im Idealfall keinen molekularen Sauerstoff enthält. Da in der Praxis ein gewisser Restanteil von molekularem Sauerstoff aber nicht ausgeschlossen werden kann, wird unter dem vorgenannten Begriff aber auch ein Gas mit einem Gehalt molekularen Sauerstoffs von höchstens 0,2 Volumenprozent verstanden.

Unter einer Vernetzung wird vorliegend die kovalente Anbindung bzw. Verknüpfung der molekularen Bausteine des Beschichtungsfluids verstanden. Bei den Bausteinen kann es sich Monomere, Oligomere und/oder Präpolymere handeln, die beispielsweise durch eine Polymerisationsreaktion miteinander verbunden werden können. Hierzu können die molekularen Bausteine des Beschichtungsfluids reaktive Gruppen aufweisen, welche Polymerisations- und/oder Vernetzungsreaktionen ermöglichen. Ein UV-härtender Lack kann reaktive Acrylate, Epoxide, Enolether oder cyclische Amine als Bindemittel verwenden. Dazu können Fotoinitiatoren und Hilfsmittel wie Vernetzer, Verlaufsmittel, Antioxidantien und Pigmente hinzukommen. Fotoinitiatoren können bei Belichtung Radikale oder reaktive Kationen bilden und können eine Polymerisation oder Vernetzungsreaktion der im Beschichtungsfluid befindlichen Monomere, Oligomere und/oder Präpolymere initiieren.

Die Idee der Erfindung besteht darin, dass sowohl das Aufbringen des Beschichtungsfluids auf das Substrat mittels des Tintenstrahldruckkopfes, als auch das Härten des Beschichtungsfluids, in sauerstofffreier Atmosphäre, also in einer Inertgasatmosphäre (entsprechend der obigen Definition mit einem Sauerstoffgehalt von höchstens 0,2 Vol-%), ausgeführt werden. Der Tintenstrahldruckkopf und die Härtungseinrichtung sind dementsprechend gemeinsam in einem Gehäuse angeordnet.

Gemäß der Erfindung ist auch das Beschichtungsfluid frei von molekularem Sauerstoff, d.h. das Beschichtungsfluid weist einen Sauerstoffgehalt von höchstens 0,2 Vol-% auf. Hierdurch kann der Sauerstoffgehalt in der Beschichtung weiter verringert werden. Ein entsprechend niedriger Sauerstoffgehalt im Beschichtungsfluid wird erreicht, indem das Beschichtungsfluid im Vorratsbehälter entgast wird.

Auch ein Spülen des Beschichtungsfluids mit einem Inertgas ist möglich.

Auf diese Weise wird die der radikalischen Polymerisation von ungesättigten Acrylatverbindungen inhärente Problematik der sogenannten Sauerstoffinhibierung unterdrückt. Sauerstoff besitzt die Eigenschaft, die Radikalkettenreaktion durch Anlagerung an die reaktiven Radikale zu unterbrechen und somit eine vollständige Polymerisation zu unterbinden oder wenigstens zu erschweren. Durch den Zusatz geeigneter Additive kann zwar ein genereller Abbruch der Polymerisation verhindert werden, jedoch wirken die Additive als Transfermoleküle und übertragen das Radikal an ein neues Monomer, Oligomer oder Präpolymer und starten somit eine neue Polymerkette, während die Polymerisation der vor der Inhibierung aktiven Polymerkette abbricht. Somit ist es günstiger, durch Verwendung einer Inertgasatmosphäre diese Inhibierung auszuschließen, um so längere Polymerketten zu erhalten. Auf diese Weise werden vorteilhafterweise weniger Vernetzungsadditive als in einer Sauerstoffatmosphäre benötigt. Anders ausgedrückt, wenn Sauerstoff vorliegt, dann kann der Sauerstoff ein Radikal inhibieren oder blockieren, das sich in der Beschichtungszubereitung befindet, so dass dieses nicht weiter reagieren kann. Eine unvollständige Polymerisation bzw. Vernetzung der molekularen Bausteine des Beschichtungsfluids kann jedoch dazu führen, dass die Beschichtung niedermolekulare Verbindungen enthält, welche eine höhere Migrationsneigung zeigen als ein hochmolekulares Polymer. Diese niedermolekularen Verbindungen können, aus der Beschichtung heraus diffundieren und damit die Umwelt belasten und für den Nutzer des beschichteten Substrats eine gesundheitliche Gefährdung darstellen. So können die niedermolekularen Verbindungen beispielsweise aus einer Verpackung migrieren und beispielsweise im Fall einer Lebensmittelverpackung in das darin befindliche Lebensmittel gelangen. Durch Verwendung einer Inertgasatmosphäre können dagegen zum einen höhere Polymerisationsgrade erreicht werden und zum anderen kann die Menge an benötigtem Fotoinitiator verringert werden. Dadurch ist es möglich, den Anteil an niedermolekularen Verbindungen, d.h. kurzkettigen Polymeren, Monomeren oder Fotoinitiatoren in der Beschichtung zu reduzieren. Somit wird die geschilderte Belastung erheblich reduziert oder gar vermieden.

Vorteilhafte Ausführungsformen und Weiterbildungen sind nachfolgend angegeben. Die Merkmale der Weiterbildungen können, soweit technisch sinnvoll, miteinander und mit jedem der Aspekte der Erfindung kombiniert werden.

Gemäß einer nicht erfindungsgemäßen Ausführungsform kann die Vorschubeinrichtung innerhalb des Gehäuses angeordnet sein, so dass der Transport des Substrats relativ zum Tintenstrahldruckkopf und zur Härtungseinrichtung derart ausgeführt wird, dass das Substrat allein innerhalb des Gehäuses transportiert wird. Die Vorschubeinrichtung kann folglich das Substrat innerhalb des Gehäuses i) von einer Spenderrolle entnehmen oder abwickeln, ii) an dem Tintenstrahldruckkopf und an der Härtungseinrichtung vorbei führen, und iii) auf eine Empfängerrolle aufwickeln. Vorteilhafter Weise erübrigt sich dadurch ein Einbringen des Substrats in das Gehäuse hinein und ein Herausbringen aus dem Gehäuse heraus, so dass ein Eindringen von Luft oder Sauerstoff durch Substrat- Einführöffnungen oder Ausführöffnungen vermieden wird.

Gemäß einer weiteren Ausführungsform können die Vorschubeinrichtung oder Teile derselben außerhalb des Gehäuses angeordnet sein. Folglich weist das Gehäuse eine Einführöffnung zur Zuführung des Substrats und/oder eine Ausführöffnung zum Ausführen des Substrats auf.

Das Substrat wird über die Einführöffnung in das Gehäuse eingeführt, an dem Tintenstrahldruckkopf und an der Härtungseinrichtung vorbeigeführt und über die Ausführöffnung aus dem Gehäuse ausgeführt. Vorteilhafter Weise kann damit das Gehäuse klein und kompakt ausgebildet sein, da weniger Komponenten darin untergebracht sind, und es lassen sich damit auch weniger flexible Substrate bearbeiten oder beschichten.

Gemäß einer Ausführungsform kann eine Abstreifeinrichtung zum Abstreifen laminarer Luftschichten oder Grenzschichten vorgesehen sein, welche in Bewegungsrichtung des Substrats dem Tintenstrahldruckkopf vorgeordnet ist, so dass vor dem Beschichten mit dem Tintenstrahldruckkopf oberflächennahe Luftschichten auf dem Substrat entfernt werden. Die Abstreifeinrichtung kann eine über dem Substrat angeordnete, Bürstvorrichtung oder eine Labyrinthstruktur umfassen, die zum Substrat hin gerichtete Fasern oder Lamellen aufweist, welche das Substrat leicht berühren oder einen geringem Abstand zu dem Substrat aufweisen. Beim Transport des Substrats relativ zur Bürstvorrichtung können die Fasern oder Lamellen der Bürstvorrichtung ein Abstreifen der Luftschichten von der Oberfläche des Substrats bewirken. Alternativ oder ergänzend kann die Abstreifeinrichtung auf die Substratoberfläche gerichtete Gasdüsen umfassen, die reihenweise längs und/oder quer zur Transportrichtung des Substrats angeordnet sind und Inertgas auf die Oberfläche des Substrats blasen, zum Abstreifen der laminaren Luftschichten.

Die Erfindung ist insbesondere zur Verwendung eines Beschichtungsfluids ohne Feststoffanteile für den Tintenstrahldruckkopf geeignet, wobei Partikel in situ erzeugt werden. Ein Verstopfen der Düsen des Tintenstrahldruckkopfes kann aufgrund des fehlenden Feststoffgehalts vermieden werden. Es können somit größere Partikel als bei der Verwendung von Dispersionen erhalten werden, wobei vorteilhafterweise auf eine Matrix oder zusätzliche Bindemittel und/oder Hilfsstoffe zur Partikelstabilisierung in der fluiden Zubereitung verzichtet werden kann.

Gemäß einer Ausführungsform der Erfindung können auch raue, polymere Beschichtungen auf Substrate appliziert werden. Unter einer rauen Beschichtung kann eine Beschichtung verstanden werden, deren Oberfläche uneben oder strukturiert ist. Solche Beschichtungen werden allgemein auch als Strukturlack bezeichnet.

Die Härtung kann durch Polymerisations- und/oder Vernetzungsreaktionen erfolgen. Die fluide Zubereitung kann zumindest ein Präpolymer und/oder ein Monomer umfassen, welches zumindest eine, nachfolgend auch als erste Gruppe bezeichnete, polymerisierbare Gruppe aufweist. Die erste Gruppe ist radikalisch polymerisierbar und/oder vernetzbar. Bei dem Beschichtungsfluid kann es sich um eine Lösung mindestens eines Präpolymers und/oder Oligomers in mindestens einem Monomer und/oder Reaktivverdünner handeln.

Das Beschichtungsfluid kann mindestens einen Photoinitiator und/oder einen Photosensibilisator und/oder einen Synergisten enthalten.

Zum Härten kann der Photoinitiator unter Einwirkung elektromagnetischer Strahlung eine radikalische Polymerisation und/oder Vernetzung der ersten Gruppen der Präpolymere und/oder der Monomere auslösen.

Alternativ oder zusätzlich zur elektromagnetischen Strahlung kann auch ein Elektronenstrahl für das Härten des Beschichtungsfluids verwendet werden.

Gemäß einer Ausführungsform kann das Beschichtungsfluid Präpolymere und/oder Monomere enthalten, die zumindest zwei erste Gruppen pro Präpolymerkette oder Monomer aufweisen, wodurch die Vernetzung einzelner Polymerketten begünstigt wird.

Das Beschichtungsfluid kann, nach einem Ausstoß aus den Düsen des Tintenstrahldruckkopfs in Form von Tropfen, während des Fluges oder auf dem Substrat gehärtet werden. Auf diese Weise können die oben genannten rauen Beschichtungen erzeugt werden. Die Formbildung der aus den Tropfen mittels Härtung hervorgegangenen Partikel kann bereits durch die Ausstoßbedingungen des verwendeten Druckkopfes bestimmt werden. Da die Partikel in situ erzeugt werden und deren Eigenschaften wie Form oder Größe über die Prozessparameter des Ausstossvorgangs eingestellt werden können, kann auf selbstorganisierende oder partikuläre Bestandteile, d.h. feste Partikel, in des Beschichtungsfluids verzichtet werden kann. Damit steht eine große Auswahl an geeigneten Präpolymeren und Monomeren zur Verfügung.

Durch die Einwirkung der Strahlung auf das auf dem Substrat aufgetragene Beschichtungsfluid kann es zu einer zumindest teilweisen Härtung des Fluids kommen, wobei die Härtung vom flüssigen über einen Gel- und einen Sol/Gel-Zustand in den festen Zustand verlaufen kann. Die UV-Dosis ist hierbei entscheidend: unter gezielter Ausnutzung der Sauerstoffinhibierung kann das Fluid im Volumen ausgehärtet werden und auf der Oberfläche klebrig bleiben, oder durch Abstimmung der Wellenlänge des UV-Lichts in Kombination mit Photoinitiatoren und ggf. dem Einsatz von UV-Absorbern kann gezielt nur die Oberfläche gehärtet werden. Mittels einer geeigneten Auswahl der Komponenten und der UV-Strahlungsquelle kann auch ein vollständige Oberflächen- und Durchhärtung erzielt werden.

Zur Härtung kann eine Strahlungsquelle verwendet werden, die Licht im UV oder UV-VIS-Bereich ausstrahlt. Hierbei eignet sich jede Strahlungsquelle, deren ausgestrahltes Licht in Hinblick auf dessen Wellenlänge und Intensität geeignet ist, um die Polymerisationsreaktion zu initiieren. Eine Möglichkeit hierzu ist eine Gasentladungslampe, insbesondere eine Quecksilber-Mitteldrucklampe. Die Strahlungsquelle kann auch als eine monochromatische LED- oder Laserstrahlungsquelle ausgebildet sein. Damit kann die Härtung der Tropfen gegenüber anderen in der Umgebung oder schon auf dem Substrat befindlichen UV-härtbaren Materialien selektiv gesteuert werden, so dass die Beschichtung auf dem Substrat (vor)gehärtet wird und somit unterschiedliche Effekte bezüglich der resultierenden Oberflächeneigenschaften erzielt werden.

Gemäß einer Ausführungsform kann die Strahlung eine Wellenlänge von 150 bis 700 nm, vorzugsweise von 200 bis 500 nm, insbesondere von 350 bis 700 nm, haben. Durch Auswahl des Wellenlängenbereichs (bzw. des gegenüber diesem Wellenlängenbereiche sensiblen Photoinitiators) kann beeinflusst werden, ob die Beschichtung vorwiegend an den Randbereichen gehärtet wird oder im Inneren stattfindet, da die Eindringtiefe des Lichtes mit dessen Wellenlänge korreliert.

Des Weiteren kann die Verwendung von langwelligerem Licht bei der Verwendung von Beschichtungsfluiden, die Farbmittel enthalten, vorteilhaft sein, da langwelligeres Licht meist von den Farbmitteln weniger stark absorbiert wird als kurzwelligeres Licht. Generell kann die Wellenlänge des zur Härtung eingesetzten Lichtes so an die Absorptionseigenschaften der in der fluiden Zubereitung enthaltenen Farbmittel angepasst werden, dass ein zur Härtung ausreichender Anteil des eingestrahlten Lichtes transmittiert.

Gemäß der Erfindung ist das Gehäuse der Vorrichtung derart ausgebildet, dass kein Licht von außen in das Gehäuse dringt, beziehungsweise, dass das Gehäuse lichtdicht abgeschirmt ist. Somit findet der Auftrag des Beschichtungsfluids durch den Tintenstrahlkopf im Dunklen statt. Eine entsprechende optische Abschirmung des Tintenstahlkopfes sowie der Härtungseinheit durch das Gehäuse ist vorteilhaft, da somit gewährleistet ist, dass bei der Härtung die Polymerisation nur durch das eingestrahlte Licht mit der dafür optimierten Wellenlänge gestartet wird.

Eine Beschichtung, nachfolgend auch als erste Beschichtung bezeichnet, wird durch den Tintenstrahldruckkopf auf dem Substrat aufgetragen. Ein beschichtetes Substrat kann auch nur eine erste Beschichtung aufweisen.

Die auf dem Substrat auftreffenden Tropfen oder polymeren Partikel können eine strukturierte, unebene Beschichtung bilden. Eine solche Beschichtung kann matt sein, einen haptischen Effekt (beispielsweise Sandeffekt) aufweisen, besonders gleitfähig, besonders wenig gleitfähig (beispielsweise als Anti-Rutsch-Beschichtung), aber auch visuell funktionalisiert (beispielsweise Farbtupfer oder Glanzpunkte mit Metallurpigmenten) sein.

Die Anhaftung der Beschichtung auf dem Substrat sowie der Partikel untereinander wird dabei insbesondere durch Form und Klebrigkeit der Partikel und der Oberfläche oder einer gegebenenfalls vorhandenen Beschichtung des Substrats bestimmt.

Unter "Klebrigkeit" wird dabei das Adhäsionsvermögen der Partikel verstanden. Die Klebrigkeit wirkt sich auf die Anhaftung der Partikel innerhalb der Beschichtung und auf dem Substrat aus. Diese Eigenschaften werden z.B. im Bereich der Haftklebstoffe (pressure sensitive adhesives PSA) unter dem Begriff "dynamische Adhäsion" beschrieben. Die Klebrigkeit wird insbesondere durch den Härtungsgrad an der Oberfläche der Partikel bestimmt. Dabei führt ein hoher Härtungsgrad an der Partikeloberfläche bzw. in den oberflächennahen Bereichen der Partikel zu einer eher geringen Klebrigkeit der Partikel.

Gemäß einer Ausführungsform wird die Beschichtung auf dem Substrat lateral strukturiert aufgebracht. So können beispielsweise Teilbereiche des Substrates mit der rauen Beschichtung versehen werden, während andere Teilbereiche des Substrates nicht beschichtet werden.

Durch Einstellung der Flächendichte (Anzahl Partikel pro Flächeneinheit) und/oder der Partikelgröße können auf der Oberfläche Matt- oder Glanzeffekte erzeugt werden. Auch Gradienten des Mattierungsgrades oder haptischer Effekte können in einfacher Weise durch entsprechende Ansteuerung des Druckkopfs und damit durch lateral variierende Flächendichten und/oder Partikelgrößen erzeugt werden. Durch geeignete Wahl des Beschichtungsmaterials und der Beschichtungsparameter kann die Art des haptischen Effekts beeinflusst werden. Die Haptik kann zwischen Sandlack- oder Schleifpapiereffekten bis hin zu Soft-Touch-Eigenschaften variiert werden. Durch die Beeinflussung der Schichtdicke können diese Eigenschaften durch ein zusätzliches Relief verstärkt werden. Mit Sandlack wird ein Strukturlack bezeichnet, der eine sandpapierähnliche Struktur und Haptik aufweist. Auch ist es möglich, die Oberflächen chemisch zu funktionalisieren wie es z.B. bei Ormoceren der 1. bis 3. Generation bekannt ist.

Bei geeigneter Materialwahl können auch siegelbare Bereiche hergestellt werden. Beispielsweise können die Partikel dazu heißschmelzbar ausgebildet werden. Auch ist eine thermische Nachvernetzung denkbar.

Vorzugsweise werden Piezo-Jet-Düsen verwendet. Bei diesen Düsen erfolgt durch den elektrischen Puls eine Verformung eines piezolektrischen Materials, und dadurch eine Schall- oder Druckwelle, wodurch das Beschichtungsmaterial in Form von Tropfen durch die Düse ausgestoßen wird. Die Pulse können durch eine Steuereinrichtung erzeugt werden.

Gemäß einer Ausführungsform kann das bereitgestellte Substrat eine zweite, härtbare Beschichtung aufweisen, die nicht oder nicht vollständig ausgehärtet ist. Die zweite Beschichtung kann ein zweites Präpolymer und/oder ein zweites Monomer mit einer zweiten polymerisierbaren Gruppe enthalten. Die zweite Beschichtung wird erst nach dem Aufbringen der ersten Beschichtung ausgehärtet, so dass die Partikel nach dem Auftreffen auf der zweiten Beschichtung anhaften. Die zweite Beschichtung kann i) durch Polymerisation und/oder Vernetzung, oder ii) durch Reaktion der zweiten polymerisierbaren Gruppe ausgehärtet werden.

Ein Aushärten der zweiten Beschichtung mit dem zweiten Präpolymer oder Monomer nach dem Auftreffen der Partikel kann zu einer verbesserten Anhaftung der polymeren Partikel auf dem beschichteten Substrat führen, so dass die zweite Beschichtung als Haftvermittler oder Haftverstärker dienen kann.

Die zweite, von der ersten Gruppe verschiedene, Gruppe kann gegenüber den Polymerisationsbedingungen der ersten Gruppe inert oder weitgehend inert sein. Die zweite Gruppe führt insbesondere zu einer Vernetzung der Präpolymerketten. Die erste Gruppe kann während des Fluges reagieren und zu einer Härtung des Tropfens führen. Da die zweite Gruppe nicht oder nur im geringen Ausmaße reagiert, steht diese Gruppe zur Vernetzung der abgeschiedenen Beschichtung zur Verfügung. Durch Reaktion der zweiten Gruppe kann in einem nachfolgenden Verfahrensschritt so beispielsweise eine Vernetzung der Partikel untereinander erfolgen. Über den Vernetzungsgrad der zweiten Gruppe kann die Porösität der Beschichtung oder deren Abriebfestigkeit eingestellt werden.

Gemäß einer Ausführungsform können die zweiten polymerisierbaren Gruppen derart ausgestaltet sein, dass in einem weiteren Verfahrensschritt eine Oberflächenfunktionalisierung der Partikel erfolgen kann. Insbesondere kann die zweite polymerisierbare Gruppe eine Ankergruppe für selektive chemische Reaktionen umfasst. In dieser Ausführungsform kann die Beschichtung beispielsweise Sensor- und/oder Indikatoreigenschaften aufweisen.

Die fluide Zubereitung kann auch ein Monomer mit einer ersten und einer zweiten, von der ersten Gruppe verschiedene, polymerisierbaren Gruppe enthalten, wobei die zweite polymerisierbare Gruppe gegenüber den Polymerisationsbedingungen der ersten Gruppe inert oder zumindest weitgehend inert ist. In dieser Ausführungsform der Erfindung können somit die auf dem Substrat abgeschiedenen Partikel in einem nachfolgenden Schritt weiter ausgehärtet und/oder untereinander vernetzt werden.

Ein beschichtetes Substrat kann mit einer dritten polymerisierbaren Gruppe bereitgestellt werden. Sowohl die zweite als auch die dritte Gruppe werden polymerisiert. Bei der zweiten und der dritten Gruppe kann es sich um verschiedene oder gleiche funktionelle Gruppen handeln. Insbesondere sind die zweite und die dritte Gruppe derart ausgebildet, dass Polymerisations- und/oder Vernetzungsreaktionen der zweiten mit der dritten polymerisierbaren Gruppe stattfinden können. Durch die gleichzeitige Polymerisation der zweiten und der dritten Gruppe kann somit eine kovalente Anbindung der Partikel an das beschichtete Substrat erfolgen.

Durch Auftragen auf unterschiedliche Teilbereiche des beschichteten Substrats kann eine dreidimensional strukturierte raue Beschichtung erhalten werden.

Eine Herstellung von dreidimensionalen Strukturen ist auch möglich, indem in einem Beschichtungsvorgang so viele Partikel pro Flächeneinheit aufgebracht werden, dass die Partikel sich zumindest teilweise übereinander ablagern.

Ein weiterer Aspekt der Erfindung betrifft ein bedrucktes oder bedruckbares Substrat mit einer ersten, rauen, polymeren Beschichtung, wobei die Beschichtung durch polymere, insbesondere kugelförmige oder weitgehend kugelförmig ausgebildete Partikel gebildet wird.

So kann eine raue Beschichtung erhalten werden, bei denen die Partikel eine feste Hülle und einen fluiden, klebrigen Kern aufweisen. Die Partikel können dabei derart ausgebildet sein, dass die Hülle bei Krafteinwirkung platzt und das Partikelinnere freigesetzt wird. Derartige Beschichtungen können beispielsweise als Mehrkomponentensysteme und/oder in der Fügetechnik verwendet werden (PSA, Pressure Sensitive Adhesive). Eine feste Verklebung kann dann durch erneutes Aushärten des freigesetzten Beschichtungsmaterials erfolgen, wobei es zu einer Nachvernetzung kommt.

Gemäß einer Ausführungsform der Erfindung weisen die Partikel der Beschichtung ein durchschnittliches Volumen von 0.01 bis 500 Picolitern, vorzugsweise 0,1 bis 150, besonders bevorzugt 0,1 bis Picolitern auf. Gleiches gilt allgemein auch für das Volumen der vom Druckkopf ausgestossenen Tropfen, also etwa auch bei der Herstellung glatter Beschichtungen.

Gemäß einer Ausführungsform kann es sich bei den rauen Beschichtungen um poröse Beschichtungen handeln. Die Porosität der Beschichtung kann dabei über die Partikelgröße bzw. das Partikelvolumen eingestellt werden.

Abhängig von der Porosität der rauen Beschichtung können diese beispielsweise als Membranen, beispielsweise semipermeable Membranen oder Filter verwendet werden.

Die Partikel der Beschichtung können untereinander vernetzt sein. Durch die Vernetzung der Partikel kann die Festigkeit der rauen Beschichtung eingestellt werden, wobei die Vernetzung chemisch aber auch physikalisch vorliegen kann. Zudem führt eine Vernetzung der Partikel innerhalb der Beschichtung zu einer Verringerung der Porösität. Die rauen Beschichtungen können als Anti-Rutschbeschichtungen verwendet werden.

Gemäß einer Ausführungsform können die Partikel der Beschichtung nur eine geringe Anhaftung untereinander und/oder eine geringe Anhaftung auf dem Substrat aufweisen. Dies kann beispielsweise dazu führen, dass sich unter Krafteinwirkung, insbesondere durch Reibung, die Partikel vom Substrat ablösen und somit die Gleitfähigkeit erhöht wird. So kann die Beschichtung als Mikrokugellager dienen.

Auch die feste Anbindung der Partikel kann die Gleitfähigkeit signifikant erhöhen.

Durch das Herausragen aus der Oberfläche können die aufgebrachten Partikel als Abstandshalter fungieren. Auf diese Weise kann ein Anhaften der sonst sehr glatten Beschichtungsoberflächen gegeneinander durch einen "Glasplatteneffekt" vermieden werden. Werden die Partikel in geringer Konzentration eingesetzt, wirkt sich ihr Vorhandensein in der Beschichtung nicht oder wenig auf die werkstoffmechanischen und physikalischen Eigenschaften wie z.B. den Glanzgrad der Beschichtung aus. Um diesen Effekt zu erzielen, ist ein Flächenanteil der Partikel auf der Oberfläche von weniger als 10%, vorzugsweise weniger als 5%, besonders bevorzugt weniger als 1%, insbesondere bevorzugt weniger als 0,5% günstig. Besonders vorteilhaft ist die Aufbringung der Abstandshalter gezielt auf die Oberfläche der Beschichtung. Auf diese Weise kann auf eine hohe Konzentration der Partikel im Volumen des Beschichtungsmaterials verzichtet werden.

In einer Weiterbildung der Erfindung enthalten die polymeren Partikel zusätzlich Pigmente und/oder Farbstoffe. Dabei kann die Beschichtung bereichsweise unterschiedliche Partikel mit unterschiedlichen Pigmenten und/oder Farbstoffen enthalten. Alternativ und/oder zusätzlich enthalten die Partikel und/oder eine gegebenenfalls vorhandene zusätzliche Beschichtung Metallurpigmente. Somit können Metallic-Effekte erzeugt werden. Auch der Einsatz von thermochromen Pigmenten ist möglich. Entsprechende Beschichtungen können als Dekorschichten eingesetzt werden.

Alternativ oder zusätzlich können die polymeren Partikel magnetische Partikel und/oder leitfähige Partikel enthalten, so dass die rauen Beschichtungen entsprechende physikalische Eigenschaften aufweisen.

Gemäß einer Ausführungsform kann zwischen dem Substrat und der rauen Beschichtung eine zweite polymere Schicht aufgebracht sein, an welcher die Partikel anhaften. Die zweite polymere Beschichtung erhöht die Anhaftung der Partikel auf dem Substrat und kann als haftvermittelnde bzw. haftverstärkende Schicht ausgebildet sein. Die erste, d.h. die raue, und die zweite Schicht können an deren Grenzflächen miteinander zumindest teilweise vernetzt sein.

Gemäß einer Ausführungsform können die polymeren Partikel der rauen Beschichtung eine Oberflächenfunktionalisierung, insbesondere eine Oberflächenfunktionalisierung durch hydrophile oder hydrophobe Gruppen aufweisen.

Ein Aspekt der Erfindung betrifft eine Vorrichtung zur Herstellung einer rauen Beschichtung auf einem Substrat mittels Ink-Jet-Druck. Die Vorrichtung kann einen Druckkopf sowie zumindest eine Lichtquelle, vorzugsweise eine UV- und/oder UV-VIS-Lichtquelle umfassen, wobei der Druckkopf eingerichtet ist, eine härtbare, fluide Zubereitung zur Verarbeitung mit Ink-Jet-Düsen als Tropfen abzugeben. Insbesondere ist der Druckkopf eingerichtet, separate, voneinander getrennte Tropfen abzugeben. Die Lichtquelle ist so positioniert, dass die abgegebenen Tropfen i) vor oder ii) nach dem Auftreffen auf dem vom Druckkopf beabstandeten Substrat zumindest teilweise durch das Licht gehärtet werden.

Gemäß einer Ausführungsform kann die Vorrichtung zusätzlich eine Beschichtungseinrichtung zum Aufbringen einer zweiten fluiden, härtbaren, polymeren Beschichtung sowie eine Transporteinrichtung zum Vorbeibewegen des Substrats an der der Beschichtungseinrichtung und dem Druckkopf umfassen, so dass die vom Druckkopf ausgestoßenen, gegebenenfalls im Flug gehärteten, Partikel auf die mit der Beschichtungseinrichtung aufgebrachte fluide Beschichtung treffen. Des Weiteren umfasst die Vorrichtung eine zweite Lichtquelle zum Härten der zweiten, fluiden Beschichtung mit den darauf aufgebrachten polymeren Partikeln, welche eine raue Beschichtung bilden.

Der Abstand vom Druckkopf beträgt bevorzugt 1 bis 5 mm, 5 besonders bevorzugt 1 bis 3 mm. Bei diesen Abständen ist eine ausreichende Auflösung und Positioniergenauigkeit beim Druckvorgang gewährleistet.

Insbesondere ist der Druckkopf dazu eingerichtet, Tropfen mit einem Volumen im Bereich von 0,01 bis 500 Picolitern, bevorzugt mit einem Volumen bis zu 0,1 bis 150 Picolitern und besonders bevorzugt mit einem Volumen von 0,1 bis Picolitern auszustoßen. Sofern die Vorrichtung mehrere Lichtquellen umfasst, kann zumindest eine Lichtquelle Lichtleitfasern oder eine Laserquelle umfassen, deren Lichtaustrittsenden so angeordnet sind, dass das austretende Licht in den Bereich zwischen Druckkopf und Substrat eingestrahlt oder direkt auf das Substrat gerichtet wird. Zumindest eine Lichtquelle kann derart angeordnet sein, dass die Richtung der Strahlung gegenüber der Flugrichtung der tropfenförmig abgegebenen fluiden Zubereitung parallel, geneigt oder senkrecht ist. Eine seitliche Einstrahlung kann die Einkopplung des Lichts in den Bereich vor den Düsen erleichtern.

Gemäß einer Ausführungsform kann zumindest eine Lichtquelle durch Elektronenstrahlvorrichtungen ersetzt werden, so dass die Tropfen und/oder die Schicht auf der Oberfläche oder die gesamte Beschichtung auf dem Substrat durch Elektronenstrahlen gehärtet werden.

Die Erfindung wird nachfolgend anhand von Ausführungsbeispielen und unter Bezugnahme auf die Zeichnungen näher erläutert. Dabei verweisen gleiche Bezugszeichen auf gleiche oder entsprechende Elemente. Die Merkmale verschiedener Ausführungsbeispiele können, soweit technisch sinnvoll, miteinander und mit jedem Aspekt der Erfindung kombiniert werden.

### Kurzbeschreibung der Figuren

Es zeigen:
- Fig. 1: eine Beschichtungsvorrichtung zum Beschichten eines flächigen Substrats mit einer Polymerbeschichtung gemäß der Erfindung
- Fig. 2: eine Beschichtungsvorrichtung gemäß einer nicht erfindungsgemässen Ausführungsform,
- Fig. 3: eine beschichtete Verpackung.

### Detaillierte Beschreibung der Erfindung

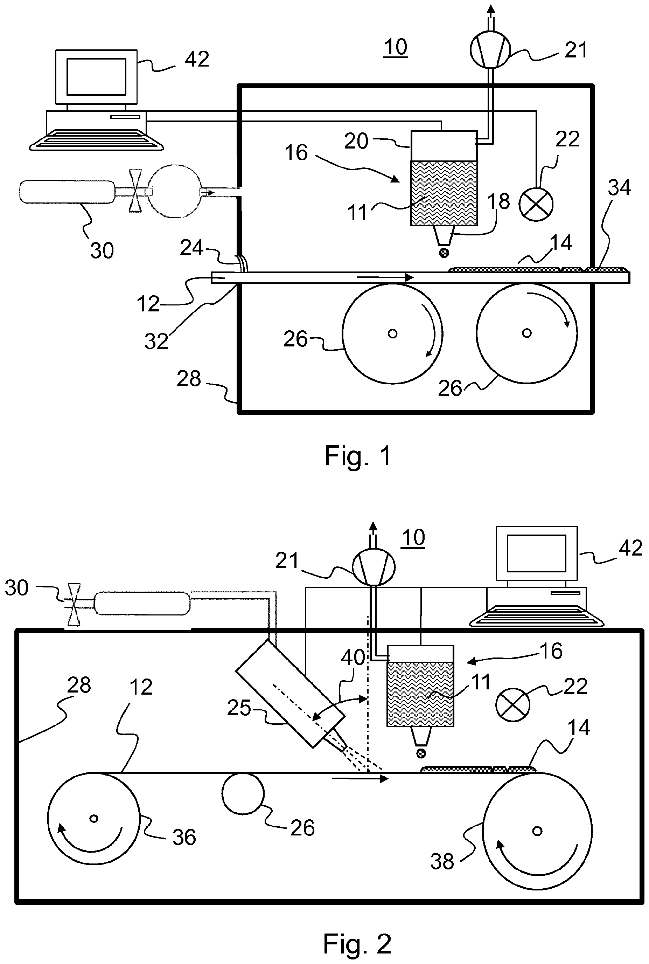

Die Fig. 1 zeigt eine Vorrichtung 10 zum Beschichten eines flächigen Substrats 12 mit einer Polymerbeschichtung 14. Die Beschichtungsvorrichtung 10 umfasst folgende Komponenten:
- einen Tintenstrahldruckkopf 16 mit mehreren Düsen 18 und einem mit den Düsen 18 verbundenen Vorratsbehälter 20 zur Aufnahme eines polymerisierbaren oder vernetzbaren Beschichtungsfluids 11,
- eine Härtungseinrichtung 22 zur Härtung des vom Tintenstrahldruckkopf 16 auf das Substrat 12 aufgetragenen Beschichtungsfluids,
- eine Vorschubeinrichtung 26 zum Transport des Substrats 12 relativ zum Tintenstrahldruckkopf 16 und zur Härtungseinrichtung 22 derart, dass ein Oberflächenabschnitt des Substrats 12 zuerst am Tintenstrahldruckkopf 16 entlang und danach an der Härtungseinrichtung 22 vorbei bewegt wird,
- ein Gehäuse 28, in welchem die Härtungseinrichtung 22 und der Tintenstrahldruckkopf 16 angeordnet sind, und
- eine Einrichtung 30 zur Zuführung eines Inertgases, welche am Gehäuse 28 angeschlossen ist, um das Gehäuse 28 mit Inertgas zu fluten, so dass sowohl das in das Gehäuse 28 eingeführte Substrat 12 in der Inertgasatmosphäre mit dem Tintenstrahldruckkopf 16 beschichtbar, als auch die aufgedruckte fluide Beschichtung mittels der Härtungseinrichtung 22 zu einer festen Polymerbeschichtung 14 durch Polymerisierung oder Vernetzung in der Inertgasatmosphäre aushärtbar ist.

Das Gehäuse 28 weist eine Einführöffnung 32 zur Zuführung des Substrats 12 und eine Ausführöffnung 34 zum Ausführen des Substrats 12 auf. Die Beschichtungsvorrichtung 10 umfasst eine Abstreifeinrichtung 24 zum Abstreifen laminarer Luftschichten oder Grenzschichten, welche in Bewegungsrichtung des Substrats 12 dem Tintenstrahldruckkopf 16 vorgeordnet ist, so dass vor dem Beschichten mit dem Tintenstrahldruckkopf 16 oberflächennahe Luftschichten auf dem Substrat 12 entfernt werden.

Die Abstreifeinrichtung ist als eine über dem Substrat 12 angeordnete Bürstvorrichtung 24 ausgebildet, die zum Substrat 12 hin gerichtete Fasern oder Lamellen aufweist, welche das Substrat 12 leicht berühren oder fast nicht berühren, wobei der Transport des Substrats 12 relativ zur Bürstvorrichtung ein Abstreifen der Luftschichten von der Oberfläche des Substrats 12 durch die Bürstvorrichtung bewirkt. Die Bürstvorrichtung ist an der Einführöffnung 32 angeordnet.

Mit den bisher beschriebenen Maßnahmen wird nun bereits das Vorhandensein von molekularem Sauerstoff und gegebenenfalls auch anderer in Luft enthaltener reaktiver Komponenten ausgeschlossen. Eine weitere Verbesserung kann allgemein und unabhängig von dem speziellen, in Fig. 1 gezeigten Ausführungsbeispiel weiterhin dadurch erzielt, indem eine am Vorratsbehälter 20 angeschlossene oder anschließbare Entgasungseinrichtung 21 zur Entfernung molekularen Sauerstoffs im Vorratsbehälter 20 vorgesehen wird. Mit der Entgasungseinrichtung werden im Beschichtungsfluid 11 gelöste Gase wie beispielsweise Stickstoff und Sauerstoff entfernt, d.h. das Beschichtungsfluid 11 wird unter Entfernung molekularen Sauerstoffs entgast. Beispielsweise kann die Entgasungseinrichtung 21, wie auch bei dem in Fig. 1 gezeigten Beispiel eine Pumpe sein, mit welcher ein Unterdruck im Vorratsbehälter 20 erzeugt wird. Durch den Unterdruck wird ein Diffusionsungleichgewicht für Sauerstoff erzeugt, so dass im Beschichtungsfluid enthaltener Sauerstoff aus dem Beschichtungsfluid 11 austritt und abgesaugt wird.

Gemäß einer weiteren Ausführungsform der Erfindung kann die Entgasungseinrichtung 21 auch eine Spüleinrichtung umfassen, mit welcher das nicht vom Beschichtungsfluid 11 eingenommene Restvolumen des Vorratsbehälters 20 mit einem Inertgas gespült wird. Auch auf diese Weise wird ein Ungleichgewicht des Sauerstoffpartialdrucks zwischen dem Beschichtungsfluid 11 und dem Restvolumen im Vorratsbehälter 20 erzeugt, da auch hier das Diffusionsgleichgewicht des Sauerstoffs gestört wird. Das Diffusionsgleichgewicht wird dabei in Richtung der Diffusion aus dem Beschichtungsfluid 11 verschoben, so dass vermehrt Sauerstoff aus dem Beschichtungsfluid 11 austritt und der Sauerstoff somit zumindest teilweise mit dem Spülgas abgeführt werden kann.

Die Fig. 2 zeigt ein zweites Ausführungsbeispiel der Beschichtungsvorrichtung 10. Das vorliegende Ausführungsbeispiel unterscheidet sich von dem in Fig. 1 gezeigten Ausführungsbeispiel durch
i) die Gestaltung der Abstreifeinrichtung 24, 25 und
ii) die Gestaltung der Vorschubeinrichtung 26.

Die in Fig. 2 gezeigte Abstreifeinrichtung ist als auf die Substratoberfläche gerichtete Gasdüsen 25 ausgebildet, die reihenweise längs und/oder quer zur Transportrichtung des Substrats 12 angeordnet sind und Inertgas auf die Oberfläche des Substrats 12 blasen, zum Abstreifen der laminaren Luftschichten. Demgegenüber ist die in Fig. 1 gezeigte Abstreifeinrichtung als eine Bürstvorrichtung 24 ausgebildet.

Die in Fig. 2 gezeigte Vorschubeinrichtung 26,36,38 ist dazu ausgebildet, den Transport des Substrats 12 relativ zum Tintenstrahldruckkopf 16 und zur Härtungseinrichtung 22 derart auszuführen, dass das Substrat 12 allein innerhalb des Gehäuses 28 transportiert wird, ohne das Gehäuse 28 zu verlassen. Das Substrat 12 wird innerhalb des Gehäuses 28 i) von einer Spenderrolle 36 abgewickelt, ii) an dem Tintenstrahldruckkopf 16 und an der Härtungseinrichtung 22 vorbeigeführt, und iii) auf eine Empfängerrolle 38 aufgewickelt. Eine Antriebsrolle 26 und die Empfängerrolle 38 sorgen für den Antrieb oder Vortrieb des Substrats 12.

Mittels der Vorrichtung 10 wird eine Lackbeschichtung auf die Oberfläche eines vorzugsweise bedruckten Papier- oder Karton-Substrats 12 aufgetragen. Dazu ist eine Vorschubeinrichtung vorgesehen, welche vorliegend eine Vorschubrolle 26 umfasst, auf welchen das Substrat 12 mit der Seite aufliegend an einem Tintenstrahldruckkopf 16 entlang einer Laufrichtung vorbeibewegt wird. Der Tintenstrahldruckkopf 16 trägt einen Film in Form eines UV-härtbaren Beschichtungsfluids gesteuert durch eine Recheneinrichtung 42 auf.

Der Tintenstrahldruckkopf 16 arbeitet nach dem Drop-on-Demand-Prinzip, wobei die Düsen 18 des Tintenstrahldruckkopfes 16 unter Ansprechen von Steuersignalen des Rechners 42 einzelne Tropfen auf die zu beschichtende Oberfläche des Substrats 12 schleudern, wobei die Tropfen einen vorzugsweise geschlossenen Film bilden. Die Düsen 18 sind in einer Reihe quer zur Laufrichtung angeordnet, wobei die Reihe zumindest 3/4 der Breite, vorzugsweise die gesamte Breite des Substrats 12 überspannt. Um hohe Beschichtungsgeschwindigkeiten erzielen zu können, wird vorzugsweise eine Anordnung von Düsen 18 verwendet, die bei der Beschichtung starr in Richtung quer zur Laufrichtung gehaltert wird. Anders als in Fig. 1 dargestellt, können auch mehrere in Laufrichtung hintereinander angeordnete Düsenreihen vorgesehen werden.

In Laufrichtung der Beschichtungseinheit 10 vorgeordnet, ist eine Einrichtung 25 zum Abstreifen laminarer Luftschichten vorgesehen. Diese umfasst eine Reihe von auf die Substratoberfläche gerichteten Düsen. Die Reihe der Düsen verläuft ebenso wie die zumindest eine Reihe der Beschichtungsdüsen 18 ebenfalls quer zur Laufrichtung.

Die Düsen der Einrichtung 25 zum Abstreifen laminarer Luftschichten sind an zumindest eine Druckgasquelle 30 angeschlossen, so dass aus den Düsen Gasströme entweichen, die auf die

Substratoberfläche oder den darauf aufgebrachten Film treffen. Durch die vorzugsweise turbulenten Gasströme werden oberflächennahe, laminare Luftschichten oder Grenzschichten auf dem Substrat entfernt. Um die Wirkung weiter zu verbessern, kann es sinnvoll sein, die Gasströme zu pulsen, und/oder zu erwärmen, und/oder in der Gasversorgung der Düsen einen oder mehrere Ultraschallschwinger vorzusehen, um die Gasströme mit Ultraschallwellen zu beaufschlagen.

Die Wirkung der Gasströme kann dadurch verbessert werden, dass die Achsen der Düsen, beziehungsweise die austretenden Gasströme schräg unter einem Winkel 40 zum Lot auf die Seite des Substrats gerichtet werden. Der Winkel beträgt zwischen 0° und 90°, vorzugsweise zwischen 20° bis 80°, insbesondere dabei zwischen 30° bis 70°, besonders bevorzugt zwischen 40° bis 60°.

Eine Verbesserung der Wirkung kann dadurch erzielt werden, dass anstelle eines einzelnen Gasstroms, wie er beispielsweise mit einer Schlitzdüse erzeugt werden kann, mehrere diskrete Gasströme durch die Mehrzahl von Düsen und/oder Gradienten in der Strömungsgeschwindigkeit in mehreren Richtungen entlang der Oberfläche aufweisen.

Nachdem die Luftschichten, etwa mittels der Gasströme der Einrichtung abgestreift worden ist, wird das Beschichtungsfluid auf das Substrat 12 aufgebracht und der dadurch gebildete Film ausgehärtet. Dazu ist eine Aushärteeinrichtung 22 zur Härtung des Beschichtungsmaterials vorgesehen, welche in Laufrichtung dem Tintenstrahldruckkopf nachgeordnet ist. Die Aushärteeinrichtung umfasst dazu eine UV-Lichtquelle. Diese Lichtquelle gibt UV- Licht mit einem Spektrum ab, welches in Kombination mit dem verwendeten Photoinitiator zur Härtungsreaktion geeignet ist.

Durch das UV-Licht der UV-Lichtquelle wird eine radikalische Polymerisation des bis dahin noch fluiden UV- Lacks in Gang gesetzt. Geeignet sind beispielsweise UV- härtende Beschichtungen auf Acrylat-Basis.

Die Vorrichtung 10 kann eine Vorrichtung zur Veredelung von Druckerzeugnissen sein. Gemäß einer Variante können auch die Druckerzeugnisse selbst mit der Vorrichtung 10 erzeugt werden, wobei mit den Düsen 18 des Tintenstrahldruckkopfes 16 Lack oder Druckfarben als Beschichtung aufgetragen werden. Auch in diesem Fall kann ein UV-härtendes Beschichtungsfluid eingesetzt werden, welches dann durch das UV-Licht der UV-Lichtquelle verfestigt wird.

Eine Abstreifeinrichtung 25 gemäß dem in Fig. 2 gezeigten Beispiel kann auch anstelle oder zusätzlich zu der Abstreifeinrichtung 24 des in Fig. 1 gezeigten Beispiels eingesetzt werden. Hierbei wird es bevorzugt, dass der Gasstrom in Richtung auf die Einführöffnung 32 zur Zuführung des Substrats 12 gerichtet ist. Damit wird einer Luftzufuhr durch die Einführöffnung 32 entgegengewirkt.

Durch die Erzeugung einer lateral strukturierten Beschichtung, welche unter Aussparung von Bereichen mittels der erfindungsgemäßen Vorrichtung aufgebracht wird, können auf der Oberfläche eines erfindungsgemäß hergestellten Druckerzeugnisses optische und/oder haptische Effekte erzielt werden. So können lokal Glanz- oder auch Matteffekte erzielt werden, die zusätzlich auch eine haptisch erfassbare Reliefstruktur aufweisen.

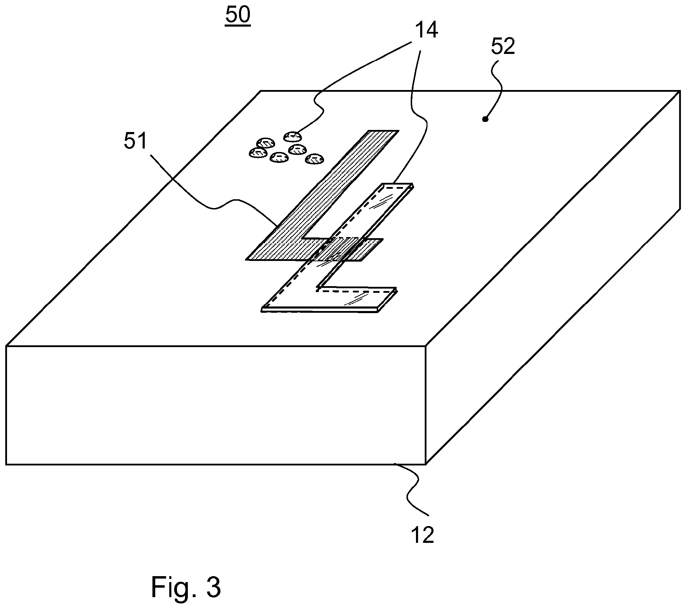

Fig. 3 zeigt ein Ausführungsbeispiel eines beschichteten Substrats 12 in Form einer Verpackung 50, beispielsweise einer Lebensmittel- oder Genussmittelverpackung. Das Substrat 12 der Verpackung 50 kann beispielsweise eine Kartonage sein. Bei dem dargestellten Beispiel ist die Kartonage nach der erfindungsgemäßen Beschichtung zu einer Faltschachtel zur Aufnahme eines Lebens- oder Genussmittels umgeformt. Vor der erfindungsgemäßen Beschichtung wurde ein Druckbild 51 aufgebracht.

Die erfindungsgemäße Beschichtung 14 ist lateral strukturiert, derart, dass Bereiche 52 von der Beschichtung 14 ausgespart sind. Durch das Nebeneinander von Beschichtung 14 und unbeschichteten Bereichen 52 können optische oder haptische Effekte erzielt werden. Haptische Effekte werden durch die gegenüber den unbeschichteten Bereichen 52 erhabene, beziehungsweise hervortretende Struktur der Beschichtung 14 erzielt. Ebenso kann die Beschichtung 14 durch eine gegenüber den unbeschichteten Bereichen 52 andere Rauigkeit oder anderen Reibungskoeffizienten haptisch erfassbar sein. Unterschiede im Brechungsindex und/oder der Rauigkeit zwischen Beschichtung 14 und unbeschichteten Bereichen 52 ergeben weiterhin optische Effekte. Beispielsweise kann das Druckbild 51 durch Glanzeffekte der Beschichtung 14 hervorgehoben werden. Bei der in Fig. 14 gezeigten Verpackung 50 wurde das Druckbild hierzu als Beispiel lateral versetzt mit der Beschichtung 14 imitiert.

Anders als in Fig. 3 gezeigt, kann die Beschichtung 14 auch deckungsgleich mit dem Druckbild 51 oder Elementen des Druckbilds 51 aufgebracht sein. Auf diese Weise können Elemente des Druckbilds 51 gezielt mit Matt- oder Glanzeffekten versehen und/oder haptisch hervorgehoben werden. Um Glanzeffekte zu erzielen, wird eine glatte Beschichtung 14 aufgebracht. Wird eine zumindest teilweise Härtung der vom Tintenstrahldruckkopf ausgestoßenen Tropfen bereits im Flug durchgeführt, können auch matte und raue Beschichtungen 14 hergestellt werden. Als weiteres Beispiel sind bei der dargestellten Verpackung 50 noch tropfenförmige Elemente (links neben dem L-förmigen Druckbild-Element) als Bestandteil der Beschichtung 14 aufgebracht. Diese können beispielsweise als haptische Elemente eine wellige oder raue Anmutung ergeben. Soll das Druckbild nur haptisch oder optisch ergänzt werden, bietet es sich ohne Beschränkung auf das dargestellte Beispiel an, Beschichtungsfluide zu verwenden, die eine transparente oder zumindest transluzente Beschichtung 14 ergeben.

Die erfindungsgemäßen beschichteten Substrate 12, wie insbesondere Lebens- oder Genussmittelverpackungen 50 zeichnen sich dadurch aus, dass aufgrund der Beschichtung und Härtung in einer Inertgasatmosphäre eine vollständige oder zumindest gegenüber bekannten Beschichtungen weitergehende Vernetzung und/oder Polymerisierung vorliegt. Damit geht einher, dass der Anteil nicht oder unvollständig vernetzter oder polymerisierter Bestandteile der Beschichtung minimiert wird. Damit sind in der Beschichtung 14 praktisch keine Bestandteile mehr enthalten, die im Laufe der Zeit aus der Beschichtung in die Umgebung, insbesondere also auch nicht in das Lebens- oder Genussmittel hinein migrieren können.

### Bezugszeichen

- 10: Vorrichtung zum Beschichten eines flächigen Substrats 12
- 11: Beschichtungsfluid
- 12: Substrat
- 14: Polymerbeschichtung
- 16: Tintenstrahldruckkopf
- 18: Düsen
- 20: Vorratsbehälter
- 21: Entgasungseinrichtung
- 22: Härtungseinrichtung
- 24: Bürstvorrichtung zum Abstreifen laminarer Luftschichten
- 25: Gasdüsen zum Abstreifen laminarer Luftschichten
- 26: Vorschubeinrichtung, Vorschubrolle
- 28: Gehäuse
- 30: Einrichtung zur Zuführung eines Inertgases
- 32: Einführöffnung zur Zuführung des Substrats 12
- 34: Ausführöffnung zum Ausführen des Substrats 12
- 36: Spenderrolle
- 38: Empfängerrolle
- 40: Neigungswinkel einer Gasdüse gegenüber einer Substrat-Normalen
- 42: Recheneinrichtung
- 50: Verpackung
- 51: Druckbild
- 52: von 14 ausgesparter Bereich

## Patentansprüche

1. Vorrichtung (10) zum Beschichten eines flächigen Substrats (12) mit einer Polymerbeschichtung (14), umfassend:
- einen Tintenstrahldruckkopf (16) mit mehreren Düsen (18) und einem mit den Düsen (18) verbundenen Vorratsbehälter (20) zur Aufnahme eines polymerisierbaren oder vernetzbaren Beschichtungsfluids (11), wobei der Vorratsbehälter (20) eine angeschlossene oder anschließbare Entgasungseinrichtung (21) zur Entfernung von im Beschichtungsfluid (11) gelösten molekularem Sauerstoff, im Vorratsbehälter aufweist, so dass der Gehalt an molekularem Sauerstoff im Beschichtungsfluid höchstens 0,2 Vol.-% beträgt,
- eine Härtungseinrichtung (22) zur Härtung des vom Tintenstrahldruckkopf (16) auf das Substrat (12) aufgetragenen Beschichtungsfluids (11),
- eine Vorschubeinrichtung (26) zum Transport des Substrats (12) relativ zum Tintenstrahldruckkopf (16) und zur Härtungseinrichtung (22) derart, dass ein Oberflächenabschnitt des Substrats (12) zuerst am Tintenstrahldruckkopf (16) entlang und danach an der Härtungseinrichtung (22) vorbei bewegt wird,
- ein Gehäuse (28), in welchem die Härtungseinrichtung (22) und der Tintenstrahldruckkopf (16) angeordnet sind und wobei das Gehäuse (28) eine Einführöffnung (32) zur Zuführung des Substrats (12) und/oder eine Ausführöffnung (34) zum Ausführen des Substrats (12) aufweist und wobei das Gehäuse(28) lichtdicht ausgebildest ist und
- eine Einrichtung (30) zur Zuführung eines Inertgases, welche am Gehäuse (28) angeschlossen ist, um das Gehäuse (28) mit Inertgas zu fluten, so dass sowohl das in das Gehäuse (28) eingeführte Substrat (12) in der Inertgasatmosphäre mit dem Tintenstrahldruckkopf (16) beschichtbar, als auch die aufgedruckte fluide Beschichtung mittels der Härtungseinrichtung (22) zu einer festen Polymerbeschichtung (14) durch Polymerisierung oder Vernetzung in der Inertgasatmosphäre aushärtbar is, wobei die Inertgasatmosphäre maximal 0,2 Vol.-% Sauerstoff enthält.

2. Vorrichtung (10) gemäß einem der vorstehenden Ansprüche, wobei die Vorrichtung (10) eine Abstreifeinrichtung (24,25) zum Abstreifen laminarer Luftschichten oder Grenzschichten aufweist, welche in Bewegungsrichtung des Substrats (12) dem Tintenstrahldruckkopf (16) vorgeordnet ist, so dass vor dem Beschichten mit dem Tintenstrahldruckkopf (16) oberflächennahe Luftschichten auf dem Substrat (12) entfernt werden.

3. Vorrichtung (10) gemäß dem vorstehenden Anspruch, wobei die Abstreifeinrichtung auf die Substratoberfläche gerichtete Gasdüsen (25) umfasst, die reihenweise längs und/oder quer zur Transportrichtung des Substrats (12) angeordnet sind und Inertgas auf die Oberfläche des Substrats (12) blasen, zum Abstreifen der laminaren Luftschichten.

4. Vorrichtung (10) gemäß einem der vorstehenden Ansprüche, **gekennzeichnet durch** mindestens eines der folgenden Merkmale:
- eine Strahlungsquelle oder Lichtquelle als Härtungseinrichtung (22) zur Härtung eines strahlenhärtbaren Beschichtungsfluids (11);
- die Lichtquelle ist dazu ausgebildet, Licht im UV-VIS-Bereich, vorzugsweise im Bereich von 150 bis 700 nm, oder von 200 bis 500 nm, oder von 350 bis 700 nm, auszusenden;
- die Härtungseinrichtung (22) umfasst mehrere Lichtquellen;
- eine Lichtquelle, welche Licht quer zur Flugrichtung der Tropfen und vorzugsweise entlang einer Reihe mehrerer beabstandeter Düsen (18) des Tintenstrahldruckkopfes (16) abgibt;
- die Lichtquelle umfasst zumindest einen Laser, eine Gasentladungslampe, bevorzugt eine Quecksilber-Mitteldrucklampe und/oder eine LED;
- zumindest eine Lichtquelle umfasst Lichtleitfasern, deren Lichtaustrittsenden so angeordnet sind, dass das austretende Licht in den Bereich zwischen Druckkopf und Substrat (12) eingestrahlt wird.

5. Vorrichtung (10) gemäß einem der vorstehenden Ansprüche, **gekennzeichnet durch** mindestens eines der folgenden Merkmale:
- der Abstand zwischen Druckkopf und Substrat (12) beträgt 1 bis 5 mm, bevorzugt 1 bis 3mm;
- der Druckkopf ist dazu ausgebildet, Tropfen mit einem Volumen im Bereich von 0,01 bis 500 Picoliter, bevorzugt 0,1 bis 150 Picoliter, besonders bevorzugt 0,1 bis 25 Picoliter zu erzeugen.

6. Verfahren zum Beschichten eines flächigen Substrats (12) mit einer Polymerbeschichtung (14), wobei
- mit einem Tintenstrahldruckkopf (16) mit mehreren Düsen (18) und einem mit den Düsen (18) verbundenen Vorratsbehälter (20) mit einem polymerisierbaren oder vernetzbaren Beschichtungsfluid (11) eine fluide Beschichtung auf das Substrat (12) im Dunkeln aufgedruckt wird, wobei molekularer Sauerstoff im Vorratsbehälter (20) mittels einer Entgasungseinrichtung (21) entfernt wird, so dass der Gehalt an molekularem Sauerstoff im fluiden Beschichtungsfluid (11) maximal 0,2 Vol.-% beträgt und das Substrat (12) mittels einer Vorschubeinrichtung (26) über eine Einführöffnung (32) des Gehäuses (28) zugeführt und/oder mittels der Vorschubeinrichtung (26) über eine Ausführöffnung (34) des Gehäuses (28) ausgeführt wird,
- mit einer Härtungseinrichtung (22) die vom Tintenstrahldruckkopf (16) auf das Substrat (12) aufgetragene fluide Beschichtung durch Vernetzen oder Polymerisieren ausgehärtet wird,
- mit einer Vorschubeinrichtung (26) das Substrat (12) relativ zum Tintenstrahldruckkopf (16) und zur Härtungseinrichtung (22) derart bewegt wird, dass ein Oberflächenabschnitt des Substrats (12) während des Auftrags der fluiden Beschichtung zuerst am Tintenstrahldruckkopf (16) entlang und danach an der Härtungseinrichtung (22) vorbeigeführt wird,
- die Härtungseinrichtung (22) und der Tintenstrahldruckkopf (16) in einem Gehäuse (28) angeordnet sind, und
- mittels einer am Gehäuse (28) angeschlossenen Einrichtung (30) zur Zuführung eines Inertgases das Gehäuse (28) mit Inertgas geflutet wird, so dass sowohl das in das Gehäuse (28) eingeführte Substrat (12) in der Inertgasatmosphäre mit dem Tintenstrahldruckkopf (16) beschichtet wird, als auch die aufgedruckte fluide Beschichtung mittels der Härtungseinrichtung (22) zu einer festen Polymerbeschichtung (14) durch Polymerisierung oder Vernetzung in der Inertgasatmosphäre ausgehärtet wird, wobei die Inertgasatmosphäre ein Gehalt an molekularem Sauerstoff von höchstens 0,2 Vol.-% aufweist.

7. Verfahren gemäß dem vorstehenden Anspruch, **gekennzeichnet durch** mindestens eines der folgenden Merkmale:
- oberflächennahe Luftschichten auf dem Substrat (12) werden mittels einer Einrichtung zum Abstreifen laminarer Luftschichten vor dem Beschichten mit dem Tintenstrahldruckkopf (16) entfernt;
- eine laminare Luftschicht auf der zu beschichtenden Seite des Substrats (12) wird mittels eines Inertgas-Stroms entfernt, der auf die zu beschichtende Oberfläche des Substrats (12) gerichtet wird;
- die Beschichtung wird lateral strukturiert aufgebracht;
- ein strahlenhärtbares Beschichtungsfluid (11) wird als vernetzbares Beschichtungsfluid (11) aufgetragen und mittels der als Lichtquelle ausgebildeten Härtungseinrichtung (22) gehärtet.

8. Verfahren gemäß einem der vorstehenden zwei Ansprüche, **gekennzeichnet durch** mindestens eines der folgenden Merkmale:
- das Beschichtungsfluid (11) wird aus den Düsen (18) in Form von Tropfen ausgestoßen, wobei die Tropfen unter Einwirkung der Strahlung zumindest teilweise aushärten, so dass vor dem Auftreffen aus den Tropfen Partikel erhalten werden;
- das Beschichtungsfluid (11) umfasst i) mindestens einen Vertreter aus einer, als eine erste Gruppe bezeichneten, radikalisch polymerisierbaren Gruppe von Präpolymeren, Oligomeren, Monomeren oder Reaktivverdünnern und ii) mindestens einen Photoinitiator, wobei das Monomer eine gegenüber den Polymerisierungsbedingungen der ersten Gruppe inerte oder weitgehend inerte zweite Gruppe aufweist oder das Beschichtungsfluid (11) ein zweites Präpolymer und/oder ein zweites Monomer mit der zweiten Gruppe aufweist, wobei die erste Gruppe während des Fluges der Tropfen und die zweite Gruppe nach dem Auftreffen der Tropfen polymerisiert wird;
- die Flugzeit der Tropfen beträgt maximal 10 ms, bevorzugt maximal 5 ms und besonders bevorzugt weniger als 1,5 ms, vorzugsweise mindestens 0,05 ms;
- die Tropfen fliegen mit einer Geschwindigkeit von 0,5 bis 14 m/s, bevorzugt 1 bis 12 m/s und besonders bevorzugt 3 bis 8 m/s;
- die Partikel weisen ein durchschnittliches Volumen von 0,01 bis 500 Picolitern, bevorzugt 0,1 bis 150 Picolitern, besonders bevorzugt 0,1 bis 25 Picolitern auf;
- die Partikel sind untereinander vernetzt;
- die Partikel enthalten Farbmittel, Farbpigmente, Farbstoffe und/oder Metallurpigmente;
- die Partikel enthalten bereichsweise magnetische und/oder leitfähige Partikel;
- bereichsweise unterschiedliche Partikel enthalten unterschiedliche Pigmente;
- die Beschichtung wird nicht vor dem Auftreffen der Tropfen vollständig ausgehärtet;
- die Beschichtung wird nach dem Auftreffen der Tropfen so ausgehärtet, dass die Tropfen an der Beschichtung anhaften;
- das Substrat (12) weist eine Beschichtung enthaltend ein drittes Präpolymer und/oder ein drittes Monomer mit einer dritten polymerisierbaren Gruppe auf, wobei die dritte polymerisierbare Gruppe i) während des Fluges der Tropfen oder ii) nach dem Auftreffen der Tropfen auf dem Substrat (12) oder iii) gegebenenfalls gleichzeitig mit der zweiten Gruppe polymerisiert wird.

9. Druckerzeugnis, umfassend ein mit einem Verfahren gemäß einem der Ansprüche 6 bis 8 hergestelltes beschichtetes Substrat (12).

## Claims

1. Apparatus (10) for coating a flat substrate (12) with a polymer coating (14), said apparatus comprising:
- an inkjet print head (16) having multiple nozzles (18) and a reservoir (20), connected to the nozzles (18), for accommodating a polymerizable or crosslinkable coating fluid (11), wherein the reservoir (20) has in the reservoir a connected or connectable degassing device (21) for removing molecular oxygen that is dissolved in the coating fluid (11), so that the molecular oxygen content in the coating fluid is at most 0.2 vol%,
- a curing device (22) for curing the coating fluid (11) applied to the substrate (12) by the inkjet print head (16),
- an advancing device (26) for transporting the substrate (12) relative to the inkjet print head (16) and the curing device (22) in such a way that a surface portion of the substrate (12) is moved first along the inkjet print head (16) and then past the curing device (22),
- a housing (28), in which the curing device (22) and the inkjet print head (16) are arranged, and wherein the housing (28) has an insertion opening (32) for feeding in the substrate (12) and/or a discharge opening (34) for discharging the substrate (12), and wherein the housing (28) is designed to be impermeable to light, and
- a device (30) for supplying an inert gas, which is connected to the housing (28) in order to flood the housing (28) with inert gas so that both the substrate (12) introduced into the housing (28) can be coated by the inkjet print head (16) in the inert gas atmosphere and the printed fluid coating can be cured by means of the curing device (22) in the inert gas atmosphere, through polymerization or crosslinking, to form a solid polymer coating (14), wherein the inert gas atmosphere contains at most 0.2 vol% oxygen.

2. Apparatus (10) according to any one of the preceding claims, wherein the apparatus (10) has a stripping device (24, 25) for stripping off laminar air layers or boundary layers, which stripping device is arranged upstream of the inkjet print head (16) in the direction of movement of the substrate (12) so that, prior to the coating by the inkjet print head (16), air layers close to the surface on the substrate (12) are removed.

3. Apparatus (10) according to the preceding claim, wherein the stripping device comprises gas nozzles (25) directed onto the substrate surface, which gas nozzles are arranged in a row along and/or transversely to the direction of transport of the substrate (12) and blow inert gas onto the surface of the substrate (12) in order to strip off the laminar air layers.

4. Apparatus (10) according to any one of the preceding claims, **characterized by** at least one of the following features:
- a radiation source or light source as the curing device (22) for curing a radiation-curable coating fluid (11);
- the light source is designed to emit light in the UV-VIS range, preferably in the range from 150 to 700 nm, or from 200 to 500 nm, or from 350 to 700 nm;
- the curing device (22) comprises multiple light sources;
- a light source which gives off light transversely to the direction of flight of the droplets and preferably along a row of multiple spaced-apart nozzles (18) of the inkjet print head (16);
- the light source comprises at least one laser, one gas discharge lamp, preferably a medium-pressure mercury lamp, and/or one LED;
- at least one light source comprises optical fibres, the light exit ends of which are arranged in such a way that the exiting light is radiated into the area between the print head and the substrate (12).

5. Apparatus (10) according to any one of the preceding claims, **characterized by** at least one of the following features:
- the distance between the print head and the substrate (12) is 1 to 5 mm, preferably 1 to 3 mm;
- the print head is designed to produce droplets having a volume in the range from 0.01 to 500 picolitres, preferably 0.1 to 150 picolitres, particularly preferably 0.1 to 25 picolitres.

6. Method for coating a flat substrate (12) with a polymer coating (14), wherein
- a fluid coating is printed onto the substrate (12) in the dark by an inkjet print head (16) having multiple nozzles (18) and a reservoir (20) which is connected to the nozzles (18) and which contains a polymerizable or crosslinkable coating fluid (11), wherein molecular oxygen is removed in the reservoir (20) by means of a degassing device (21) so that the molecular oxygen content in the fluid coating fluid (11) is at most 0.2 vol%, and the substrate (12) is fed in via an insertion opening (32) of the housing (28) by means of an advancing device (26) and/or is discharged via a discharge opening (34) of the housing (28) by means of the advancing device (26),
- the fluid coating applied to the substrate (12) by the inkjet print head (16) is cured by a curing device (22) through crosslinking or polymerization,
- the substrate (12) is moved relative to the inkjet print head (16) and the curing device (22) by an advancing device (26) in such a way that, during the application of the fluid coating, a surface portion of the substrate (12) is moved first along the inkjet print head (16) and then past the curing device (22),
- the curing device (22) and the inkjet print head (16) are arranged in a housing (28), and
- the housing (28) is flooded with inert gas by means of a device (30) connected to the housing (28) for supplying an inert gas, so that both the substrate (12) introduced into the housing (28) is coated by the inkjet print head (16) in the inert gas atmosphere and the printed fluid coating is cured by means of the curing device (22) in the inert gas atmosphere, through polymerization or crosslinking, to form a solid polymer coating (14), wherein the inert gas atmosphere has a molecular oxygen content of at most 0.2 vol%.

7. Method according to the preceding claim, **characterized by** at least one of the following features:
- prior to the coating by the inkjet print head (16), air layers located close to the surface on the substrate (12) are removed by means of a device for stripping off laminar air layers;
- a laminar air layer on the side of the substrate (12) that is to be coated is removed by means of an inert gas stream which is directed onto the surface of the substrate (12) that is to be coated;
- the coating is applied in a laterally structured manner;
- a radiation-curable coating fluid (11) is applied as a crosslinkable coating fluid (11) and is cured by means of the curing device (22) designed as a light source.

8. Method according to any one of the preceding two claims, **characterized by** at least one of the following features:
- the coating fluid (11) is expelled from the nozzles (18) in the form of droplets, wherein the droplets at least partially cure under the effect of the radiation so that particles are obtained from the droplets prior to impact;
- the coating fluid (11) comprises i) at least one representative from a radically polymerizable group of prepolymers, oligomers, monomers or reactive diluents, referred to as a first group, and ii) at least one photoinitiator, wherein the monomer contains a second group which is inert or largely inert with respect to the polymerization conditions of the first group, or the coating fluid (11) contains a second prepolymer and/or a second monomer containing the second group, wherein the first group is polymerized during the flight of the droplets and the second group is polymerized after impact of the droplets;
- the flight time of the droplets is at most 10 ms, preferably at most 5 ms, and particularly preferably less than 1.5 ms, preferably at least 0.05 ms;
- the droplets fly at a speed of 0.5 to 14 m/s, preferably 1 to 12 m/s, and particularly preferably 3 to 8 m/s;
- the particles have an average volume of 0.01 to 500 picolitres, preferably 0.1 to 150 picolitres, particularly preferably 0.1 to 25 picolitres;
- the particles are crosslinked with one another;
- the particles contain colorants, colour pigments, dyes and/or metallic pigments;
- the particles contain magnetic and/or conductive particles in some regions;
- different particles contain different pigments in some regions;
- the coating is not fully cured prior to impact of the droplets;
- the coating is cured after impact of the droplets so that the droplets adhere to the coating;
- the substrate (12) has a coating which contains a third prepolymer and/or a third monomer containing a third polymerizable group, wherein the third polymerizable group is polymerized i) during the flight of the droplets, or ii) after impact of the droplets on the substrate (12), or iii) optionally at the same time as the second group.

9. Printed product, comprising a coated substrate (12) produced by a method according to any one of claims 6 to 8.

## Revendications

1. Dispositif (10) pour enduire un substrat (12) plat avec un enduit polymère (14), comprenant :
- une tête d'impression à jet d'encre (16) avec plusieurs buses (18) et un réservoir (20) relié aux buses (18) pour recevoir un fluide d'enduction (11) polymérisable ou réticulable, où le réservoir (20) présente un équipement de dégazage (21) raccordé ou raccordable pour éliminer l'oxygène moléculaire libéré dans le fluide d'enduction (11) dans le réservoir, de sorte que la teneur en oxygène moléculaire dans le fluide d'enduction s'élève au plus à 0,2 % en volume,
- un équipement de durcissement (22) pour durcir le fluide d'enduction (11) appliqué sur le substrat (12) par la tête d'impression à jet d'encre (16),
- un équipement d'avance (26) pour transporter le substrat (12) relativement à la tête d'impression à jet d'encre (16) et à l'équipement de durcissement (22) de sorte qu'une partie de surface du substrat (12) soit d'abord déplacée le long de la tête d'impression à jet d'encre (16) puis au niveau de l'équipement de durcissement (22),
- un logement (28) dans lequel sont agencés l'équipement de durcissement (22) et la tête d'impression à jet d'encre (16) et où le logement (28) présente un orifice d'admission (32) pour amener le substrat (12) et/ou un orifice d'évacuation (34) pour évacuer le substrat (12) et où le logement (28) est conçu de façon opaque et
- un équipement (30) pour amener un gaz inerte, lequel équipement est raccordé au logement (28) pour inonder le logement (28) avec un gaz inerte, de sorte que, tout à la fois, le substrat (12) admis dans le logement (28) puisse être enduit avec la tête d'impression à jet d'encre (16) dans l'atmosphère de gaz inerte, et l'enduit fluidique imprimé puisse être durci par polymérisation ou réticulation dans l'atmosphère de gaz inerte au moyen de l'équipement de durcissement (22) pour former un enduit polymère (14) solide, où l'atmosphère de gaz inerte contient au maximum 0,2 % en volume d'oxygène.

2. Dispositif (10) selon la revendication précédente, où le dispositif (10) présente un équipement d'extraction (24, 25) pour extraire des couches d'air ou des couches limites laminaires, lequel est agencé en amont de la tête d'impression à jet d'encre (16) dans la direction de déplacement du substrat (12) de sorte que, avant l'enduction avec la tête d'impression à jet d'encre (16), des couches d'air proches de la surface soient éliminées du substrat (12).

3. Dispositif (10) selon la revendication précédente, dans lequel l'équipement d'extraction comprend des buses de gaz (25) orientées vers la surface de substrat, qui sont agencées en rangée dans et/ou transversalement à la direction de transport du substrat (12) et soufflent un gaz inerte sur la surface du substrat (12), pour extraire les couches d'air laminaires.

4. Dispositif (10) selon l'une des revendications précédentes, **caractérisé par** au moins l'une des caractéristiques suivantes :
- une source de rayonnement ou une source de lumière en tant qu'équipement de durcissement (22) pour durcir un fluide d'enduction (11) pouvant être durci par rayonnement ;
- la source de lumière est conçue pour émettre une lumière dans la plage ultraviolet-visible, de préférence dans la plage de 150 à 700 nm, ou de 200 à 500 nm, ou de 350 à 700 nm ;
- l'équipement de durcissement (22) comprend plusieurs sources de lumière ;
- une source de lumière, laquelle émet une lumière transversalement à la direction de vol des gouttelettes et de préférence le long d'une rangée de plusieurs buses (18) espacées de la tête d'impression à jet d'encre (16) ;
- la source de lumière comprend au moins un laser, une lampe luminescente à gaz, de préférence une lampe au mercure à moyenne pression et/une DEL ;
- au moins une source de lumière comprend des fibres optiques dont les extrémités de sortie de lumière sont agencées de telle sorte que la lumière sortante soit irradiée dans la région entre la tête d'impression et le substrat (12).

5. Dispositif (10) selon l'une des revendications précédentes, **caractérisé par** au moins l'une des caractéristiques suivantes :
- la distance entre la tête d'impression et le substrat (12) est de 1 à 5 mm, de préférence de 1 à 3 mm ;
- la tête d'impression est conçue pour produire des gouttelettes avec un volume dans la plage de 0,01 à 500 picolitres, de préférence de 0,1 à 150 picolitres, particulièrement de préférence de 0,1 à 25 picolitres.

6. Procédé pour enduire un substrat (12) plat avec un enduit polymère (14), dans lequel :
- avec une tête d'impression à jet d'encre (16) avec plusieurs buses (18) et un réservoir (20) relié aux buses (18) avec un fluide d'enduction (11) polymérisable ou réticulable, un enduit fluidique est imprimé dans l'obscurité sur le substrat (12), où de l'oxygène moléculaire dans le réservoir (20) est éliminé au moyen d'un équipement de dégazage (21), de sorte que la teneur en oxygène moléculaire dans le fluide d'enduction (11) fluidique s'élève au maximum à 0,2 % en volume et le substrat (12) est amené au moyen d'un équipement d'avance (26) via un orifice d'admission (32) du logement (28) et/ou au moyen de l'équipement d'avance (26) via un orifice d'évacuation (34) du logement (28),
- avec un équipement de durcissement (22), l'enduit fluidique appliqué sur le substrat (12) par la tête d'impression à jet d'encre (16) est durci par polymérisation ou réticulation,
- avec un équipement d'avance (26), le substrat (12) est déplacé relativement à la tête d'impression à jet d'encre (16) et à l'équipement de durcissement (22) de telle sorte qu'une partie de surface du substrat (12) soit passée d'abord le long de la tête d'impression à jet d'encre (16) puis au niveau de l'équipement de durcissement (22) pendant l'application de l'enduit fluidique,
- l'équipement de durcissement (22) et la tête d'impression à jet d'encre (16) sont agencés dans un logement (28), et
- au moyen d'un équipement (30) raccordé au logement (28) pour amener un gaz inerte, le logement (28) est inondé avec un gaz inerte, de sorte que, tout à la fois, le substrat (12) admis dans le logement (28) soit enduit avec la tête d'impression à jet d'encre (16) dans l'atmosphère de gaz inerte, et l'enduit fluidique imprimé soit durci dans l'atmosphère de gaz inerte au moyen de l'équipement de durcissement (22) pour former un enduit polymère (14) solide par polymérisation ou réticulation, où l'atmosphère de gaz inerte présente une teneur en oxygène moléculaire d'au plus 0,2 % en volume.

7. Procédé selon la revendication précédente, **caractérisé par** au moins l'une des caractéristiques suivantes :
- des couches d'air proches de la surface sur le substrat (12) sont éliminées au moyen d'un équipement pour extraire des couches d'air laminaires avant l'enduction avec la tête d'impression à jet d'encre (16) ;
- une couche d'air laminaire sur le côté à enduire du substrat (12) est éliminée au moyen d'un flux de gaz inerte qui est orienté vers la surface à enduire du substrat (12) ;
- l'enduction est apportée en étant structurée latéralement ;
- un fluide d'enduction (11) pouvant être durci par rayonnement est appliqué en tant que fluide d'enduction (11) réticulable et durci au moyen de l'équipement de durcissement (22) conçu en tant que source de lumière.

8. Procédé selon l'une des deux revendications précédentes, **caractérisé par** au moins l'une des caractéristiques suivantes :
- le fluide d'enduction (11) est éjecté hors des buses (18) sous la forme de gouttelettes, où les gouttelettes durcissent au moins partiellement sous l'action du rayonnement, de sorte que, avant l'impact, des particules soient obtenues à partir des gouttelettes ;
- le fluide d'enduction (11) comprend i) au moins un agent parmi un groupe polymérisable par voie radicalaire, désigné en tant que premier groupe, de prépolymères, oligomères, monomères ou diluants réactifs, et ii) au moins un photoinitiateur, où le monomère présente un deuxième groupe inerte ou largement inerte à l'égard des conditions de polymérisation du premier groupe, ou le fluide d'enduction (11) présente un deuxième prépolymère et/ou un deuxième monomère avec le deuxième groupe, où le premier groupe est polymérisé pendant le vol des gouttelettes et le deuxième groupe est polymérisé après l'impact des gouttelettes ;
- la durée de vol des gouttelettes s'élève au maximum à 10 ms, de préférence au maximum à 5 ms, et particulièrement de préférence à moins 1,5 ms, de préférence à moins de 0,05 ms ;
- les gouttelettes volent avec une vitesse de 0,5 à 14 m/s, de préférence de 1 à 12 m/s, et particulièrement de préférence de 3 à 8 m/s ;
- les particules présentent un volume moyen de 0,01 à 500 picolitres, de préférence de 0,1 à 150 picolitres, particulièrement de préférence de 0,1 à 25 picolitres ;
- les particules sont réticulées entre elles ;
- les particules contiennent des matières colorantes, des pigments colorants, des colorants et/ou des pigments métalliques ;
- les particules contiennent par endroits des particules magnétiques et/ou conductrices ;
- des particules différentes par endroits contiennent des pigments différents ;
- l'enduit n'est pas entièrement durci avant l'impact des gouttelettes ;
- l'enduit est durci après l'impact des gouttelettes de telle sorte que les gouttelettes adhèrent à l'enduit ;
- le substrat (12) présente un enduit contenant un troisième prépolymère et/ou un troisième monomère avec un troisième groupe polymérisable, où le troisième groupe polymérisable est polymérisé i) pendant le vol des gouttelettes ou ii) après l'impact des gouttelettes sur le substrat (12) ou iii) le cas échéant simultanément avec le deuxième groupe.

9. Produit imprimé, comprenant un substrat (12) enduit fabriqué selon l'une des revendications 6 à 8.
